(19)

Europäisches
Patentamt

European
Patent Office

Office européen
des brevets

(11)    **EP 1 356 873 B1**

(12)    # EUROPÄISCHE PATENTSCHRIFT

(45)  Veröffentlichungstag und Bekanntmachung des
Hinweises auf die Patenterteilung:
**23.04.2008  Patentblatt 2008/17**

(51)  Int Cl.:
***B08B 15/02*** *(2006.01)*        ***G05B 19/00*** *(2006.01)*

(21)  Anmeldenummer: **03006583.3**

(22)  Anmeldetag: **24.03.2003**

(54)  **Sicherheitswerkbank mit Sicherheitsüberwachungssystem**

Safety workbench with safety monitoring system

Etabli de sécurité avec système de surveillance de sécurité

(84)  Benannte Vertragsstaaten:
**DE DK ES GB IT SE**

(30)  Priorität: **22.04.2002  DE 10217904**

(43)  Veröffentlichungstag der Anmeldung:
**29.10.2003  Patentblatt 2003/44**

(73)  Patentinhaber: **Thermo Electron LED GmbH**
**63505 Langenselbold (DE)**

(72)  Erfinder:
• **Ross, Gerd**
**60388 Frankfurt (DE)**

• **Glück, Walter**
**63594 Hasselroth (DE)**

(74)  Vertreter: **Tomerius, Isabel et al**
**Lang & Tomerius,**
**Bavariaring 29**
**80336 München (DE)**

(56)  Entgegenhaltungen:
**EP-A- 0 844 030        DE-A1- 19 619 495**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft eine Sicherheitswerkbank, welche ein Sicherheitsüberwachungssystem aufweist, welches die Überwachung des Gesamtzustandes der Sicherheitswerkbank gestattet.

Sicherheitswerkbänke und insbesondere mikrobiologische Sicherheitswerkbänke zur Bearbeitung mikrobiologischer Proben, wie sie beispielsweise in der DE 4441784 C2 beschrieben sind, unterliegen verschiedenen internationalen Zulassungsvoraussetzungen und werden entsprechend den unterschiedlichen internationalen Normen gebaut, geprüft und zugelassen. Voraussetzung für den Betrieb sind auch regelmäßig durchzuführende Kontrollen und Prüfungen durch autorisiertes Wartungspersonal. Bei der Überprüfung einer Sicherheitswerkbank werden die einzelnen vorgeschriebenen Gerätekomponenten jeweils für sich auf ihre Funktionsfähigkeit hin kontrolliert. Zusätzlich können den Personenschutz betreffende Messungen - entsprechend den geltenden Vorschriften - durchgeführt werden, beispielsweise der sogenannte KI-Discus-Personenschutzfaktor nach DIN EN 12469, BS 5726, DIN 12980. Üblich ist es auch, während des Betriebs der Sicherheitswerkbank bestimmte Gerätefunktionen zu überwachen und Fehlfunktionen, beispielsweise durch Auslösen eines optischen oder akustischen Alarms, an den Benutzer zu melden. Alle diese während des Betriebes der Sicherheitswerkbank oder bei Wartungsarbeiten ermittelten Messergebnisse beziehen sich jedoch jeweils nur auf eine separate Gerätefunktion oder einen einzelnen Geräteparameter. Eine Bewertung des Gesamtzustands der Sicherheitswerkbank erlauben diese Einzelmesswerte nicht.

Aufgabe der Erfindung ist es entsprechend, eine Sicherheitswerkbank anzugeben, welche ein Sicherheitsüberwachungssystem aufweist, das die Beurteilung eines Gesamtzustandes der Sicherheitswerkbank gestattet.

Die Lösung dieser Aufgabe gelingt mit der Sicherheitswerkbank gemäß Anspruch 1. Weitere Ausführungsformen sind den Unteransprüchen zu entnehmen.

Die Erfindung betrifft also eine Sicherheitswerkbank, welche grundsätzlich wie eine herkömmliche Sicherheitswerkbank ausgebildet sein kann und einen Arbeitsraum aufweist, der von einem Gehäuse umgeben und auf der Gehäusefrontseite über eine mit einer verstellbaren Frontscheibe verschließbare Arbeitsöffnung zugänglich ist, und mit einem Sicherheitsüberwachungssystem zur Überwachung verchiedener Gerätefunktionen. Eine derartige Sicherheitswerkbank ist beispielsweise in der EP-0 844 030 beschrieben. Von einer herkömmliche Sicherheitswerkbank unterscheidet sich die erfindungsgemäße Sicherheitswerkbank durch ein Sicherheitsüberwachungssystem, welches einen Prozessor umfasst. Dieser Prozessor verknüpft rechnerisch Messdaten, welche bei der Überwachung vorgegebener Gerätefunktionen während des Betriebs der Sicherheitswerkbank ermittelt wurden, und/oder im Sicherheitsüberwachungssystem abgespeicherte Geräteparameter. Als Ergebnis dieser rechnerischen Verknüpfung wird eine Kennzahl erhalten, die Rückschlüsse über einen Gesamtzustand der Sicherheitswerkbank erlaubt.

Die rechnerisch ermittelte Kennzahl kann dem Bediener der Sicherheitswerkbank mittels eines Anzeigeelements angezeigt werden. Hierfür kann entweder ein Anzeigeelement verwendet werden, welches ohnehin bereits in der Sicherheitswerkbank vorhanden ist, oder ein gesondertes Anzeigeelement, welches ausschließlich zur Anzeige der Kennzahl benutzt wird.

Die Ermittlung der Messdaten für die vorgegebenen Gerätefunktionen kann grundsätzlich auf im Stand der Technik übliche Art und Weise geschehen. Gleiches gilt ebenfalls für die Ermittlung bestimmter Geräteparameter, beispielsweise des bereits erwähnten Personenschutzfaktors.

Für die Berechnung der Kennzahl wird im Sicherheitsüberwachungssystem zweckmäßig für jede gemessene Gerätefunktion eine Punkteskala hinterlegt. Einem bestimmten Messwert, der beispielsweise bei der automatischen Kontrolle einer bestimmten Gerätefunktion während des Betriebs der Sicherheitswerkbank ermittelt wurde, entspricht also ein bestimmter Punktwert auf der Punkteskala. Der Prozessor ordnet dem übermittelten Messwert entsprechend der Punkteskala einen Zahlenwert zu, und dieser Zahlenwert wird zur Berechnung der Kennzahl verwendet. Mittels der im Sicherheitsüberwachungssystem hinterlegten Punkteskalen für alle Gerätefunktionen, die bei der Berechnung der Kennzahl der Sicherheitswerkbank berücksichtigt werden sollen, wird für die Berechnung für jede der Gerätefunktionen ein Zahlenwert ermittelt, der in die Berechnungsformel der Kennzahl eingesetzt wird.

Gleiches gilt im Hinblick auf die im Sicherheitsüberwachungssystem abgespeicherten Geräteparameter, die beispielsweise vor Inbetriebnahme der Sicherheitswerkbank oder während der Kontrolle der Sicherheitswerkbank durch das Wartungspersonal ermittelt wurden. Jedem der ermittelten Geräteparameter entspricht wiederum eine Punkteskala, so dass jedem Geräteparameter ein bestimmter Zahlenwert für die Berechnung zugeordnet werden kann.

Durch die rechnerische Verknüpfung der Zahlenwerte, die jeweils einem Geräteparameter oder einer Gerätefunktion entsprechen, ergibt sich ein Gesamtwert, der die Einzelergebnisse für bestimmte Gerätezustände miteinander kombiniert und so ein Gesamtzustands-Ergebnis liefert. Dabei ist es zweckmäßig, solche Gerätefunktionen oder Geräteparameter besonders stark zu gewichten, die für einen sicheren Betrieb der Sicherheitswerkbank eine besondere Bedeutung besitzen. Für den sicheren Betrieb besonders wesentliche Gerätefunktionen oder Geräteparameter gehen daher zweckmäßig mit einer höheren Gewichtung in die Berechnung der Kennzahl ein als untergeordnete Gerätefunktionen oder Geräteparameter. Auf welche Art und Weise die Gewichtung erfolgt, hängt dabei beispielsweise vom gewünschten Sicherheitsstandard der Sicherheitswerkbank und vom beabsichtigten Anwendungsgebiet ab. Die unterschiedliche Gewichtung der verschiedenen Gerätefunktionen und -parameter kann zum Beispiel durch Unterschiede in den jeweils zugeordneten Punkteskalen Eingang in die Berechnung der Kennzahl finden. So können beispielsweise für wichtige Gerätefunktionen oder -parameter höhere Punktwerte als für weniger wichtige Funktionen oder Parameter vergeben werden. Alternativ können bei gleichem Umfang der Punkteskalen die für wichtige Gerätefunktionen oder -parameter ermittelten Zahlenwerte mehrfach in der Berechnungsformel der Kennzahl berücksichtigt werden. In einer bevorzugten Ausführungsform werden Zahlenwerte, die für solche Gerätefunktionen oder Geräteparameter ermittelt wurden, die besonders wesentlich für den sicheren Betrieb der Sicherheitswerkbank sind, als Multiplikator in der Berechnung berücksichtigt. Weniger wichtige Gerätefunktionen oder -parameter gehen dagegen nur additiv in die Formel ein.

Der Einfachheit halber ist es bevorzugt, Gerätefunktion oder Geräteparameter mit der zugehörigen Punkteskala linear zu korrelieren. Dabei entspricht zweckmäßig eine optimale Funktion dem größten Wert der Skala und eine unzureichende Funktion dem niedrigsten Skalenwert. Es kann zweckmäßig sein, dem niedrigsten Punkt der Skala den Wert Null zuzuordnen. Eine unzureichende Gerätefunktion liefert dann im Prozessor des Sicherheitsüberwachungssystems der erfindungsgemäßen Sicherheitswerkbank den Wert Null. Geht dieser Zahlenwert als Multiplikator in die Berechnungsformel der Kennzahl ein, liefert das Produkt ebenfalls Null, selbst wenn die Messergebnisse für andere Gerätefunktionen oder Geräteparameter gute Ergebnisse ergeben haben. Die so berechnete Kennzahl Null würde einen instabilen Betrieb der Sicherheitswerkbank anzeigen, da ein wesentlicher Geräteparameter oder eine wesentliche Gerätefunktion außerhalb des akzeptablen Bereichs liegt.

Die berechnete Kennzahl kann als solche auf dem Anzeigeelement ausgegeben werden. Zur einfacheren Bewertung durch den Benutzer der Sicherheitswerkbank erfolgt die Ausgabe der Kennzahl zweckmäßig in Form einer Prozentzahl, wobei 100 % einer optimalen Funktion und 0 % einem instabilen Betrieb zugeordnet sind. Falls gewünscht, können für die berechneten Kennzahlen im Sicherheitsüberwachungssystem auch Auswertungskriterien in Form von Anzeigetexten oder Ähnlichem hinterlegt werden. Beispielsweise ist es möglich, anstelle der Kennzahl Null oder zusätzlich zu dieser im Anzeigeelement den Text anzuzeigen: '"Die Sicherheitswerkbank arbeitet instabil" oder Ähnliches. Außerdem ist es möglich, einen optischen und/oder akustischen Alarm auszulösen, wenn die ermittelte Kennzahl in einem als kritisch vorgegebenen Bereich zu liegen kommt. Dieser Alarm dient üblicherweise nicht dazu, Alarmmeldungen zu ersetzen, welche bei der Einzelüberwachung bestimmter Gerätefunktionen ausgelöst werden. Bevorzugt ist es vielmehr, die im Stand der Technik üblichen Überwachungssysteme beizubehalten und die einzelnen Gerätefunktionen wie im Stand der Technik üblich weiterhin zu überwachen.

Welche Gerätefunktionen und Geräteparameter mit dem Sicherheitsüberwachungssystem in der erfindungsgemäßen Werkbank überwacht werden, hängt in erster Linie vom geplanten Verwendungs- und Einsatzzweck der Sicherheitswerkbank ab. Zweckmäßig finden jedoch alle für einen sicheren Betrieb der Sicherheitswerkbank besonders wesentlichen Funktionen bei der Berechnung der Kennzahl Berücksichtigung. Berücksichtigt werden wenigstens zwei der folgenden Gerätefunktionen oder Geräteparameter: Abluftgeschwindigkeit, Abluftvolumenstrom, Umluftgeschwindigkeit, Umluftvolumenstrom, Leistungsreserve des Abluftgebläses, Leistungsreserve des Umluftgebläses, KI-Discus (Personenschutzfaktor) und Filterstandzeit. Unter diesen Kriterien sind für einen sicheren Betrieb der Werkbank die folgenden Parameter und Funktionen besonders wichtig und gehen daher zweckmäßig als Multiplikator in die Berechnung der Kennzahlen ein: Abluftgeschwindigkeit, Abluftvolumenstrom und KI-Discus (Personenschutzfaktor).

Wie bereits erwähnt, werden die angegebenen Gerätefunktionen grundsätzlich auf im Stand der Technik übliche Weise mit den üblichen Messgeräten ermittelt. Unter den vorstehend angegebenen Kriterien sind die Abluftgeschwindigkeit, Umluftgeschwindigkeit, der Abluftvolumenstrom und Umluftvolumenstrom Gerätefunktionen, die während des Betriebs der Sicherheitswerkbank ermittelt werden können. Üblicherweise wird hierbei entweder die Abluftgeschwindigkeit oder der Abluftvolumenstrom gemessen, um Aufschluss über die Funktionsfähigkeit des Abluftsystems der Sicherheitswerkbank zu geben. Gleiches gilt für die Prüfung des Umluftsystems. Es ist jedoch ebenfalls denkbar, Abluftgeschwindigkeit und Abluftvolumenstrom bzw. Umluftgeschwindigkeit und Umluftvolumenstrom gleichzeitig zu messen und die jeweils ermittelten Messwerte gemeinsam in der Formel zur Berechnung der Kennzahl zu berücksichtigen. Die Messung erfolgt beispielsweise mit Hilfe von Druckdosen, und die ermittelten Messwerte werden an den Prozessor des erfindungsgemäßen Sicherheitsüberwachungssystems übermittelt, wo den Messergebnissen der zugehörige Zahlenwert zur Berechnung der Kennzahl zugeordnet wird.

Bei den Kriterien Leistungsreserve des Abluft- bzw. Umluftgebläses, Personenschutzfaktor und Filterstandzeit handelt es sich um Serviceparameter, für die bei der Berechnung der Kennzahl auf in das Sicherheitsüberwachungssystem eingegebene Daten zurückgegriffen wird.

Der KI-Discus-Personenschutzfaktor wird beispielsweise nach dem Aufstellen der Sicherheitswerkbank und anschließend in bestimmten Wartungsabständen nach den bereits erwähnten Normvorschriften ermittelt. Der vom Wartungspersonal ermittelte Personenschutzfaktor wird von diesem in das Sicherheitsüberwachungssystem eingespeichert, und der abgespeicherte Wert wird zur Berechnung der Kennzahl durch den Prozessor herangezogen.

Die Leistungsreserve des Abluft- oder Umluftgebläses wird zweckmäßig bereits bei der Herstellung der Sicherheitswerkbank im Sicherheitsüberwachungssystem hinterlegt. Als Kriterium für die Leistungsreserve der Gebläse dient beispielsweise die Steuerspannung, mit welcher das Gebläse betrieben wird. Wird das Gebläse anstelle der maximalen Steuerspannung von 100 % nur mit 75 % der maximalen Steuerspannung betrieben, besitzt das Gebläse eine Leistungsreserve von 25 %. Dieser Wert wird im Sicherheitsüberwachungssystem abgespeichert, und ihm ist wiederum ein Punktwert anhand der zugehörigen Punkteskala zugeordnet, welcher in die Berechnung der Kennzahl einfließt. Alternativ ist es selbstverständlich möglich, den der Leistungsreserve zugeordneten Punktewert unmittelbar für die Berechnung der Kennzahl im System abzuspeichern.

Zur Berücksichtigung der Filterstandzeit kann im Sicherheitsüberwachungssystem der Zeitpunkt abgespeichert werden, zu dem der Filter in der Sicherheitswerkbank eingebaut oder ausgewechselt wurde. Ausgehend von diesem Anfangswert ermittelt ein in der Sicherheitswerkbank vorhandenes Zeitmessgerät die aktuelle Filterstandzeit, welche wiederum anhand eines zugeordneten Punktwertes in die Berechnung der Kennzahl eingeht. Die Berechnung der Kennzahl kann kontinuierlich oder in vorgegebenen Abständen erfolgen.

In einer besonders bevorzugten Ausführungsform der Erfindung erfolgt die Ermittlung gemäß der Formel (A+B+C+D) x E x F. Die Buchstaben A bis F entsprechen dabei den ermittelten Zahlenwerten für einzelne Gerätefunktionen oder Geräteparameter, nämlich im Einzelnen: A = Umluftgeschwindigkeit oder Umluftvolumenstrom, B = Leistungsreserve des Abluftgebläses, C = Leistungsreserve des Umluftgebläses, D = Filterstandzeit, E = Abluftgeschwindigkeit oder Abluftvolumenstrom und F= KI-Discus (Personenschutzfaktor).

Aus der Formel ist unmittelbar ersichtlich, dass in diesem Beispiel die Abluftgeschwindigkeit oder der Abluftvolumenstrom und der KI-Discus-Personenschutzfaktor als für die zuverlässige Funktion der Sicherheitswerkbank besonders wichtige Kriterien vorgegeben wurden. Die übrigen Kriterien sind dagegen von untergeordneter Bedeutung. Wird für Abluftgeschwindigkeit oder Abluftvolumenstrom oder KI-Discus-Personenschutzfaktor ein schlechter (niedriger) Wert ermittelt, wird bei der Berechnung durch den Prozessor des Sicherheitsüberwachungssystems ebenfalls eine niedrige Kennzahl ermittelt, welche einen schlechten Betriebszustand der Sicherheitswerkbank anzeigt.

Die Erfindung soll nachfolgend anhand einer Zeichnung näher erläutert werden. Darin zeigt

Fig. 1    schematisch eine erfindungsgemäße Sicherheitswerkbank, und

Fig. 2    verdeutlicht schematisch anhand eines Blockschemas die Berechnung der Kennzahl der erfindungsgemäßen Sicherheitswerkbank.

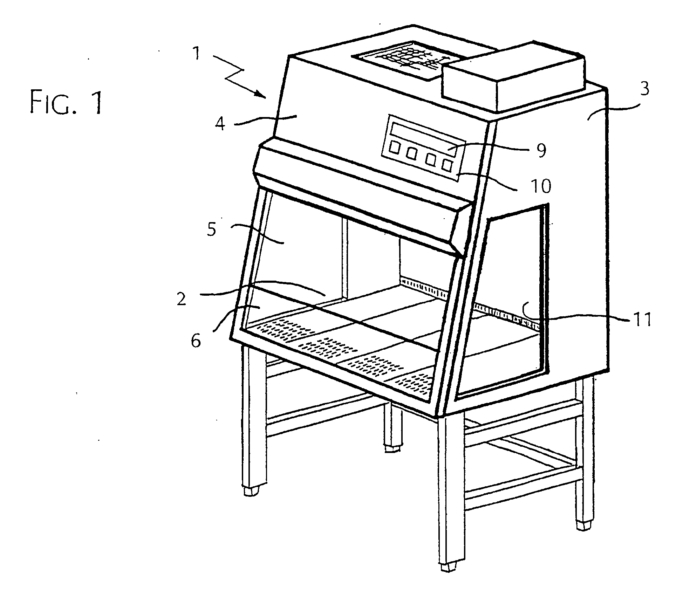

Fig. 1 zeigt eine erfindungsgemäße Sicherheitswerkbank 1, die beispielsweise zur Bearbeitung mikrobiologischer Kulturen eingesetzt werden kann. In ihrem Grundaufbau entspricht die Sicherheitswerkbank 1 dem, was aus dem Stand der Technik bekannt und beispielsweise in der DE 4441784 C2 beschrieben ist. Die Sicherheitswerkbank 1 weist einen von einem Gehäuse 3 umschlossenen Arbeitsbereich 2 auf, welcher über eine Arbeitsöffnung 6 in der Frontseite 4 der Sicherheitswerkbank 1 zugänglich ist. Die Arbeitsöffnung 6 wird von einer verstellbaren Frontscheibe 5 verschlossen. In die Gehäusefrontseite 4 integriert ist eine Bedieneinheit 10 mit einem Anzeigeelement 9, beispielsweise einem herkömmlichen Display. Mit der Bedieneinheit 10 können auf an sich bekannte Weise die verschiedenen Gerätefunktionen bedient werden. Zum Beispiel lassen sich über die Bedieneinheit 10 die Frontscheibe 5 verstellen, die Gerätebeleuchtung an- und abschalten, die Gerätebelüftung regeln, ins Gerät integrierte (hier aber nicht dargestellte) Steckdosen schalten usw.

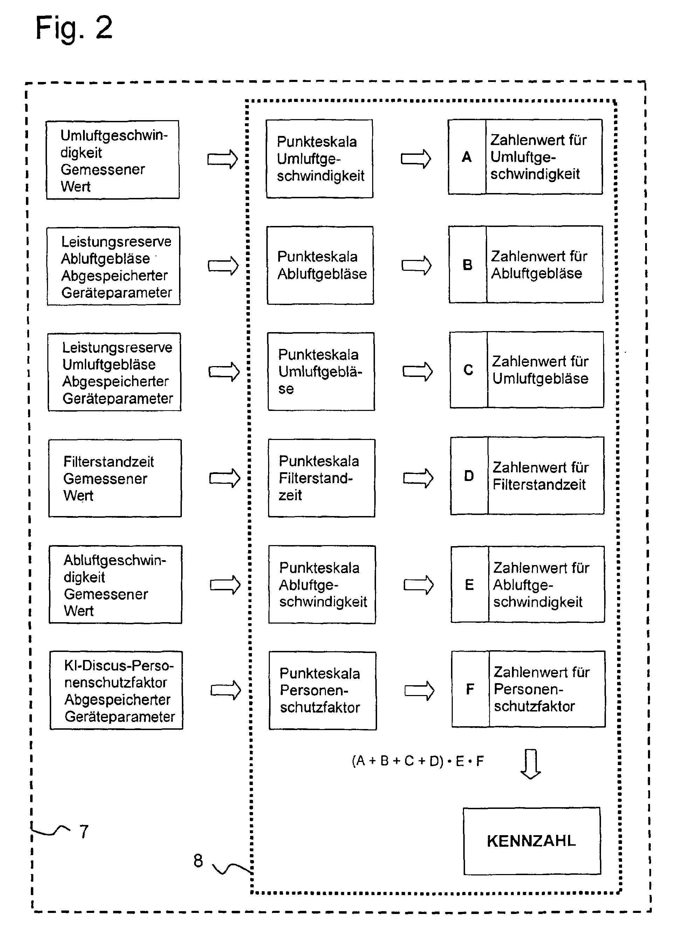

Ebenfalls in die Sicherheitswerkbank 1 integriert sind Überwachungssysteme, welche die Funktion der einzelnen Gerätekomponenten überwachen. Diese Überwachungssysteme sind hier ebenfalls nicht dargestellt, entsprechen aber dem im Stand der Technik Üblichen. Welche Gerätefunktionen in der erfindungsgemäßen Sicherheitswerkbank 1 überwacht werden, kann grundsätzlich variieren. Im gezeigten Fall ist im Abluftsystem ein Sensor angeordnet, welcher die Abluftgeschwindigkeit misst. Ein weiterer Sensor ist im Umluftsystem angeordnet, um die Umluftgeschwindigkeit festzustellen. Diese Sensoren sind Bestandteil des Sicherheitsüberwachungssystems 7 (Fig. 2) der erfindungsgemäßen Sicherheitswerkbank 1.

Die während des Betriebs der Sicherheitswerkbank festgestellten Werte für die Abluft- und Umluftgeschwindigkeiten werden an einen Mikroprozessor 8 übermittelt, welcher die ermittelten Werte mit Punkteskalen vergleicht, in denen den jeweils ermittelten Messergebnissen ein bestimmter Zahlenwert zugeordnet wird. Dieser Vorgang ist anhand des Blockdiagramms in Fig. 2 vereinfacht dargestellt. Der Prozessor 8 zur Berechnung der Kennzahl der erfindungsgemäßen Sicherheitswerkbank 1 kann beispielsweise in das Bedienelement integriert sein, sich aber auch an einer beliebigen anderen Stelle der Sicherheitswerkbank befinden. Auch das Bedienelement 10 selbst und das Anzeigeelement 9 müssen nicht unbedingt auf der Frontseite 4 der Sicherheitswerkbank 1 angeordnet sein, sondern können beispielsweise auch in die Rückwand 11 im Innenraum 2 der Sicherheitswerkbank integriert sein.

Im gezeigten Fall werden neben der Abluft- und Umluftgeschwindigkeit auch noch der KI-Discus-Personenschutzfaktor, die Filterstandzeit sowie die Leistungsreserven des Abluft- und Umluftgebläses bei der Beurteilung des Gesamtzustandes der Sicherheitswerkbank mittels der errechneten Kennzahl berücksichtigt.

Die Leistungsreserven des Umluft- und Abluftgebläses sind Geräteparameter, die üblicherweise bereits bei Herstellung der Sicherheitswerkbank ermittelt werden. Wie bereits eingangs erwähnt, kann als Basis für die Berechnung der Leistungsreserve die maximale Steuerspannung der Gebläse angesetzt werden. Die maximale Steuerspannung entspricht dabei 100 Prozent, die tatsächlichgenutzte Steuerspannung x Prozent. Die Leistungsreserve des Gebläses ist entsprechend 100 - x Prozent. Die ermittelte Leistungsreserve des Gebläses wird im Sicherheitsüberwachungssystem 7 der Sicherheitswerkbank 1 abgespeichert. Wie schon im Fall der Umluft- und Abluftgeschwindigkeiten entspricht auch den Leistungsreserven des Abluft- und Umluftgebläses jeweils eine Punkteskala, die ebenfalls im Sicherheitsüberwachungssystem 7 hinterlegt ist. Die den jeweiligen Leistungsreserven entsprechenden Zahlenwerte werden ermittelt und vom Prozessor 8 zur Berechnung der Kennzahl der Sicherheitswerkbank verwendet, wie dies in Fig. 2 schematisch dargestellt ist.

Entsprechend wird beim Personenschutzfaktor vorgegangen. Der KI-Discus-Personenschutzfaktor wird zunächst vor der ersten Inbetriebnahme der Sicherheitswerkbank 1 ermittelt. Der ermittelte Personenschutzfaktor wird im Sicherheitsüberwachungssystem 7 abgespeichert. Aus der Punkteskala für den Personenschutzfaktor wird zur Errechnung der Kennzahl der zugehörige Zahlenwert ausgelesen und vom Prozessor zur Berechnung verwendet. Ergibt sich bei der Wartung der Sicherheitswerkbank und bei der erneuten Vermessung des Personenschutzfaktors eine Änderung, wird der geänderte Personenschutzfaktor im Sicherheitsüberwachungssystem 7 hinterlegt und bei den nachfolgenden Berechnungen der Kennzahl verwendet.

Zur Ermittlung der Filterstandzeit wird ein in die Sicherheitswerkbank integrierter Zeitmesser (Timer) verwendet. Vor der ersten Inbetriebnahme der Sicherheitswerkbank 1 oder nach dem Auswechseln des Filters wird der Timer auf Null gestellt. Für die Berechnung der Filterstandzeit wird der ab dem Zeitpunkt Null vergangene Zeitraum verwendet. Dem im Sicherheitsüberwachungssystem 7 ermittelten Zeitraum wird aus einer im Sicherheitsüberwachungssystem hinterlegten Punkteskala erneut ein Zahlenwert zugeordnet, und dieser wird zur Berechnung der Kennzahl im Prozessor 8 eingesetzt.

Nachfolgend soll die Korrelation zwischen den Punkteskalen und den zugehörigen Gerätefunktionen bzw. Geräteparametern näher erläutert werden. Ausgegangen wird dabei jeweils von den für die Sicherheitswerkbank üblichen Messwertbereichen und Parameterbereichen. Dem für den sicheren Betrieb der Sicherheitswerkbank optimalen Wert aus dem Wertbereich entspricht jeweils der höchste Zahlenwert der zugehörigen Punkteskala. Dem für den Betrieb der Sicherheitswerkbank schlechtesten Wert des Messwertbereichs entspricht jeweils der niedrigste Wert der zugehörigen Punkteskala. Die Korrelation der Zwischenwerte der Geräteparameter oder Messdaten und der zugehörigen Punktwerte ist linear. Im einzelnen ist die Zuordnung der Punkte zu den gemessenen Gerätefunktionen und Geräteparametern wie folgt:

1. Abluftgeschwindigkeit (E)
80 - 100 % Abluft          →          10 Punkte
60 - 80 % Abluft          →          10 ... 0 Punkte
< 60 % Abluft          →          0 Punkte
2. Umluftgeschwindigkeit (A)
80 - 100 % Umluftluft          →          10 Punkte
60 - 80 % Umluftluft          →          10... 3 Punkte
< 60 % Umluftluft          →          3 Punkte
3. Leistungsreserve Abluftgebläse (B)
20 % Reserve          →          10 Punkte
20 - 0 % Reserve          →          10 ... 5 Punkte
4. Leistungsreserve Umluftgebläse (C)
20% Reserve          →          10 Punkte
20 - 0 % Reserve          →          10 ... 5 Punkte
5. Filterstandzeit (D)
0 Stunden          →          10 Punkte
0 - 20000 Stunden          →          10 ... 1 Punkte
> 20000 Stunden          →          1 Punkt
6. KI-Discus-Personenschutzfaktor nach DIN EN 12469 (F)
0 - 10 PSF*          →          10 Punkte          *PersonenSchutzFaktor
10 - 50 PSF*          →          10 ... 5 Punkte
50 - 60 PSF*          →          5 ... 0 Punkte
> 60 PSF*          →          0 Punkte

Wie aus dem Vorstehenden ersichtlich, erstrecken sich die Punkteskalen für solche Gerätefunktionen und -parameter, die für den sicheren Betrieb der Sicherheitswerkbank 1 von besonderer Wichtigkeit sind, zwischen der Zahlenwerten 0 und 10. Für weniger wichtige Funktionen und Parameter, bei denen Mängel nicht zu einer gravierenden Fehlfunktion der Sicherheitswerkbank führen, ist der untere Zahlenwert der Punkteskala größer als 0. Zudem gehen die für weniger wichtige Funktionen und Parameter ermittelte Zahlenwerte nur additiv in die Berechnung der Kennzahl ein, wichtige dagegen als Multiplikator. Anzumerken ist noch, dass die für die Berechnung ermittelten Punktwerte nicht ganzzahlig sein müssen.

Die nach den Punkten 1 bis 6 ermittelten Punktwerte werden im Prozessor 8 zur Berechnung der Kennzahl verwendet. Die Berechnung erfolgt nach der Formel: $(A+B+C+D) \times E \times F$.

Nachfolgend werden einige Beispiele zur Berechnung von Kennzahlen anhand der vorstehend genannten Formel angegeben. Die maximal mögliche Punktzahl, welche nach dieser Formel errechnet werden kann, beträgt 4000 Punkte. Die Kennzahl gibt an, wie viel Prozent dieser maximalen Punktzahl erreicht wurden. Eine Kennzahl von 100 entspricht demnach der maximalen Punktzahl von 4000 Punkten, eine Kennzahl von Null der minimal möglichen Punktzahl von 0 Punkten.

**Beispiel 1**

| | | | Berechnete Punktezahl |
|---|---|---|---|
| Zuluftgeschwindigkeit (Abweichung in %) | 0 | E | 10 |
| Umluftgeschwindigkeit (Abweichung in %) | 0 | A | 10 |
| Leistungsreserve Abluftgebläse (%) | 20 | B | 10 |
| Leistungsreserve Umluftgebläse (%) | 20 | C | 10 |
| Filterstandzeit in Stunden | 0 | D | 10 |
| KI-Discus (gemessener Personenschutzfaktor) | 1 | F | 10 |
| **Errechnete Kennzahl** | | | **100** |

**Beispiel 2**

| | | | Berechnete Punktezahl |
|---|---|---|---|
| Zuluftgeschwindigkeit (Abweichung in %) | 0 | E | 10 |
| Umluftgeschwindigkeit (Abweichung in %) | 0 | A | 10 |
| Leistungsreserve Abluftgebläse (%) | 5 | B | 6,25 |
| Leistungsreserve Umluftgebläse (%) | 5 | C | 6,25 |
| Filterstandzeit in Stunden | 6000 | D | 7 |
| KI-Discus (gemessener Personenschutzfaktor) | 1 | F | 10 |
| **Errechnete Kennzahl** | | | **75** |

**Beispel 3**

| | | | Berechnete Punktezahl |
|---|---|---|---|
| Zuluftgeschwindigkeit (Abweichung in %) | 0 | E | 10 |
| Umluftgeschwindigkeit (Abweichung in %) | 0 | A | 10 |
| Leistungsreserve Abluftgebläse (%) | 3 | B | 5,75 |
| Leistungsreserve Umluftgebläse (%) | 3 | C | 5,75 |
| Filterstandzeit in Stunden | 10000 | D | 6 |
| KI-Discus (gemessener Personenschutzfaktor) | 36 | F | 7 |
| **Errechnete Kennzahl** | | | **50** |

**Beispiel 4**

| | | | Berechnete Punktezahl |
|---|---|---|---|
| Zuluftgeschwindigkeit (Abweichung in %) | 25 | E | 7,5 |
| Umluftgeschwindigkeit (Abweichung in %) | 25 | A | 7,5 |
| Leistungsreserve Abluftgebläse (%) | 0 | B | 5 |
| Leistungsreserve Umluftgebläse (%) | 0 | C | 5 |
| Filterstandzeit in Stunden | 15000 | D | 3 |
| KI-Discus (gemessener Personenschutzfaktor) | 42 | F | 6 |
| **Errechnete Kennzahl** | | | **25** |

**Beispiel 5**

| | | | Berechnete Punktezahl |
|---|---|---|---|
| Zuluftgeschwindigkeit (Abweichung in %) | 30 | E | 5 |
| Umluftgeschwindigkeit (Abweichung in %) | 30 | A | 5 |
| Leistungsreserve Abluftgebläse (%) | 0 | B | 5 |
| Leistungsreserve Umluftgebläse (%) | 0 | C | 5 |
| Filterstandzeit in Stunden | 20000 | D | 1 |
| KI-Discus (gemessener Personenschutzfaktor) | 62 | F | 0 |
| **Errechnete Kennzahl** | | | **0** |

Die errechneten Kennzahlen sind jeweils auf 5er-oder 10er-Werte aufgerundet.
Für den Gesamtzustand der Sicherheitswerkbank 1 haben die in Beispiel 1 bis 5 berechneten Kennzahlen die folgende Bedeutung:

**Beispiele zur Bewertung der Kennzahl**

| | |
|---|---|
| Werkbank läuft stabil | 100% |
| Werkbank stabil mit Leistungsreserven | 75% |
| Werkbank stabil mit eingeschränkten Leistungsreserven | 50% |
| Werkbank stabil ohne Leistungsreserven | 25% |
| Werkbank instabil | 0% |

Das Ergebnis der Berechnung des Prozessors 8, nämlich die Kennzahl, kann den Benutzer der Sicherheitswerkbank 1 als solche im Anzeigeelement 9 angezeigt werden. Alternativ oder zusätzlich zur Anzeige der Kennzahl kann auch ein zugehöriger Bewertungstext im Anzeigeelement angezeigt werden.

**Patentansprüche**

1. Sicherheitswerkbank (1) mit einem Arbeitsraum (2), der von einem Gehäuse (3) umgeben und auf der Gehäusefrontseite (4) über eine mit einer verstellbaren Frontscheibe (5) verschließbare Arbeitsöffnung (6) zugänglich ist, und mit einem Sicherheitsüberwachungssystem (7) zur Überwachung verschiedener Gerätefunktionen, **dadurch gekennzeichnet, dass** das Sicherheitsüberwachungssystem (7) einen Prozessor (8) umfasst, welcher bei der Überwachung vorgegebener Gerätefunktionen während des Betriebs der Sicherheitswerkbank (1) ermittelte Messdaten und/oder im Sicherheitsüberwachungssystem (7) abgespeicherte Geräteparameter rechnerisch derart miteinander verknüpft, dass als Ergebnis eine Kennzahl erhalten wird, die Rückschlüsse über einen Gesamtzustand der Sicherheitswerkbank (1) erlaubt.

2. Sicherheitswerkbank gemäß Anspruch 1,
   **dadurch gekennzeichnet,**
   **dass** die ermittelte Kennzahl mittels eines Anzeigeelements (9) angezeigt wird.

3. Sicherheitswerkbank gemäß Anspruch 1 oder 2,
   **dadurch gekennzeichnet,**
   **dass** im Sicherheitsüberwachungssystem (7) für jede der gemessenen Gerätefunktionen eine Punkteskala hinterlegt ist, anhand derer der Prozessor (8) einem während des Betriebs der Sicherheitswerkbank (1) gemessenen Messwert einen entsprechenden Zahlenwert zuordnet, welcher zur Berechnung der Kennzahl verwendet wird.

4. Sicherheitswerkbank gemäß einem der Ansprüche 1 bis 3,
   **dadurch gekennzeichnet,**
   **dass** für jeden abgespeicherten Geräteparameter im Sicherheitsüberwachungssystem (7) eine Punkteskala hinterlegt ist, mit der dem Geräteparameter ein Zahlenwert zuordenbar ist, welcher zur Berechnung der Kennzahl verwendet wird.

5. Sicherheitswerkbank gemäß einem der Ansprüche 1 bis 4,
   **dadurch gekennzeichnet,**
   **dass** verschiedene Gerätefunktionen und Geräteparameter entsprechend ihrer Bedeutung für einen sicheren Betrieb der Sicherheitswerkbank (1) mit unterschiedlicher Gewichtung in die Berechnung der Kennzahl eingehen.

6. Sicherheitswerkbank gemäß Anspruch 5,
   **dadurch gekennzeichnet,**
   **dass** ein einer für den sicheren Betrieb wesentlichen Gerätefunktion oder einem wesentlichen Geräteparameter entsprechender Zahlenwert als Multiplikator in die Berechnung eingeht.

7. Sicherheitswerkbank gemäß einem der Ansprüche 3 bis 6,
   **dadurch gekennzeichnet,**
   **dass** Punkteskala und zugehörige Gerätefunktion oder zugehöriger Geräteparameter linear miteinander korreliert sind, wobei eine optimale Funktion dem größten Wert der Skala und eine unzureichende Funktion dem niedrigsten Wert der Skala entspricht.

8. Sicherheitswerkbank gemäß Anspruch 6 oder 7,
   **dadurch gekennzeichnet,**
   **dass** einer unzureichenden Funktion bei einer wesentlichen Gerätefunktion oder einem wesentlichen Geräteparameter der Punktwert 0 zugeordnet wird.

9. Sicherheitswerkbank gemäß einem der Ansprüche 1 bis 8,
   **dadurch gekennzeichnet,**
   **dass** die Kennzahl als Prozentzahl ausgegeben wird, wobei 100 % einer optimalen Funktion der Sicherheitswerkbank (1) und 0 % einem instabilen Betrieb zugeordnet sind.

10. Sicherheitswerkbank gemäß einem der Ansprüche 1 bis 9,
    **dadurch gekennzeichnet,**
    **dass** wenigstens zwei der folgenden Gerätefunktionen oder Gerätparameter in die Berechnung der Kennzahl eingehen:

    - Abluftgeschwindigkeit
    - Abluftvolumenstrom
    - Umluftgeschwindigkeit
    - Umluftvolumenstrom
    - Leistungsreserve des Abluftgebläses
    - Leistungsreserve des Umluftgebläses
    - KI-Discus (Personenschutzfaktor)

- Filterstandzeit.

**11.** Sicherheitswerkbank gemäß Anspruch 10,
**dadurch gekennzeichnet,**
**dass** wenigstens einer der für folgende Geräteparameter oder Gerätefunktionen ermittelten Punktwerte als Multiplikator in die Berechnung der Kennzahl eingeht:

- Abluftgeschwindigkeit
- Abluftvolumenstrom
- KI-Discus (Personenschutzfaktor).

**12.** Sicherheitswerkbank gemäß Anspruch 11,
**dadurch gekennzeichnet,**
**dass** die Kennzahl gemäß folgender Formel berechnet wird:

$$(A + B + C + D) \cdot E \cdot F$$

worin die Buchstaben den Punktwerten für folgende Gerätefunktionen oder Geräteparameter entsprechen:

A - Umluftgeschwindigkeit oder Umluftvolumenstrom
B - Leistungsreserve des Abluftgebläses
C - Leistungsreserve des Umluftgebläses
D - Filterstandszeit
E - Abluftgeschwindigkeit oder Abluftvolumenstrom
F - KI-Discus (Personenschutzfaktor).

## Claims

1. A safety cabinet (1) comprising a workspace (2) that is enclosed by a housing (3) and is accessible on the front side of the housing (4) through a work opening (6) that can be closed with an adjustable front window (5), and a safety monitoring system (7) that monitors various device functions, wherein the safety monitoring system (7) comprises a processor (8) that analyses data obtained from the operation of the safety cabinet (1) and/or device parameters stored in the safety monitoring system (7) during the monitoring of predetermined device functions, the processor is configured to obtain a characteristic number from the data and/or the parameter, wherein said characteristic number makes it possible to deduce the overall status of the safety cabinet (1).

2. The safety cabinet according to claim 1, wherein that the determined characteristic number is displayed on a display element (9).

3. The safety cabinet according to claim 1 or 2, wherein a point scale is stored in the safety monitoring system (7) for each of the measured device functions, wherein the processor (8) assigns a corresponding numerical value for use in the calculation of the characteristics number to a measuring value measured during the operation of the safety cabinet (1).

4. The safety cabinet according to one of the claims 1 to 3, wherein a point scale is stored in the safety monitoring system (7) for each stored device parameter, wherein said point scales make it possible to assign the numerical value for use in the calculation of the characteristic number to the respective device parameters.

5. The safety cabinet according to one of the claims 1 to 4, wherein different device functions and device parameters are incorporated into the calculation of the characteristic number with a different weighting that depends on their importance for the safe operation of the safety cabinet (1).

6. The safety cabinet according to Claim 5, wherein the numerical value that corresponds to an important device function or an important device parameter for the safe operation of the safety cabinet is incorporated into the calculation in the form of a multiplier.

**7.** The safety cabinet according to one of the claims 3 to 6, wherein the point scale and corresponding device functions or corresponding device parameters are linearly correlated, wherein an optimal function corresponds to the highest value of the scale and an insufficient function corresponds to the lowest value of the scale.

**8.** The safety cabinet according to claim 6 or 7, wherein the point value 0 is assigned to an important device function or an important device parameter that is determined to be insufficient.

**9.** The safety cabinet according to one of the claims 1 to 8, wherein the characteristic number is output in the form of a percentage, wherein 100% corresponds to an optimal function of the safety cabinet (1) and 0% correspond to an unstable operation.

**10.** The safety cabinet according to one of the claims 1 to 9, wherein the fact that at least two of the device functions or device parameters listed below are incorporated into the calculation of the characteristic number:

- exhaust air speed
- volumetric exhaust air flow
- circulated air speed
- volumetric circulated air flow
- power reserve of the exhaust air fan
- power reserve of the circulated air fan
- KI-Discus (operator protection factor)
- filter operating time.

**11.** The safety cabinet according to claim 10, wherein at least one point value determined for the device parameters or device functions listed below is incorporated into the calculation of the characteristic number in the form of a multiplier:

- exhaust air speed
- volumetric exhaust air flow
- KI-Discus (operator protection factor).

**12.** The safety cabinet according to claim 11, wherein the characteristic number is calculated in accordance with the formula

$$(A+B+C+D)\cdot E\cdot F$$

wherein the letters correspond to the point values for the following device functions or device parameters:

A - circulated air speed or volumetric circulated air flow
B - power reserve of the exhaust air fan
C - power reserve of the circulated air fan
D - filter operating time
E - exhaust air speed or volumetric exhaust air flow
F - KI-Discus (operator protection factor).

**Revendications**

**1.** Établi de sécurité (1) avec un espace de travail (2) entouré par un capotage (3) et qui est accessible sur la face avant du capotage (4) par une ouverture de travail (6) pouvant être fermée par une vitre avant (5) déplaçable, et avec un système de surveillance de la sécurité (7) destiné à surveiller différentes fonctions de l'appareil, **caractérisé en ce que** le système de surveillance de la sécurité (7) comprend un processeur (8) qui associe par le calcul des données de mesure obtenues pendant la surveillance de fonctions prédéterminées de l'appareil au cours du fonctionnement de l'établi de sécurité (1) et/ou des paramètres d'appareil enregistrés dans le système de surveillance de la sécurité (7), de telle sorte que le résultat obtenu est une valeur caractéristique permettant des conclusions sur un état global de l'établi de sécurité (1).

**2.** Établi de sécurité selon la revendication 1, **caractérisé en ce que** la grandeur caractéristique déterminée est affichée au moyen d'un élément d'affichage (9).

**3.** Établi de sécurité selon la revendication 1 ou 2, **caractérisé en ce qu'**est enregistrée dans le système de surveillance de la sécurité (7), pour chacune des fonctions de l'appareil mesurées, une échelle de points à l'aide de laquelle le processeur (8) attribue à une valeur de mesure mesurée pendant le fonctionnement de l'établi de sécurité (1) une valeur numérique correspondante, qui est utilisée pour calculer la valeur caractéristique.

**4.** Établi de sécurité selon l'une des revendications 1 à 3, **caractérisé en ce qu'**est enregistrée pour chaque paramètre d'appareil enregistré dans le système de surveillance de la sécurité (7) une échelle de points avec laquelle une valeur numérique servant au calcul de la valeur caractéristique peut être attribuée au paramètre de l'appareil.

**5.** Établi de sécurité selon l'une des revendications 1 à 4, **caractérisé en ce que** différentes fonctions de l'appareil et paramètres de l'appareil sont inclus dans le calcul de la valeur caractéristique avec une pondération différente selon leur importance pour le fonctionnement sûr de l'établi de sécurité (1).

**6.** Établi de sécurité selon la revendication 5, **caractérisé en ce qu'**une valeur numérique correspondant à une fonction de l'appareil essentielle pour un fonctionnement sûr ou à un paramètre de l'appareil essentiel est incluse dans le calcul comme multiplicateur.

**7.** Établi de sécurité selon l'une des revendications 3 à 6, **caractérisé en ce que** l'échelle de points et la fonction de l'appareil correspondante ou le paramètre de l'appareil correspondant sont corrélés entre eux de façon linéaire, une fonction optimale correspondant à la valeur la plus élevée de l'échelle et une fonction insuffisante à la valeur la plus basse de l'échelle.

**8.** Établi de sécurité selon la revendication 6 ou 7, **caractérisé en ce qu'**une fonction insuffisante pour une fonction essentielle de l'appareil ou un paramètre essentiel de l'appareil reçoit la valeur de 0 points.

**9.** Établi de sécurité selon l'une des revendications 1 à 8, **caractérisé en ce que** la valeur caractéristique est produite sous la forme d'un pourcentage, 100 % étant associé à un fonctionnement optimal de l'établi de sécurité (1) et 0 % à un fonctionnement instable.

**10.** Établi de sécurité selon l'une des revendications 1 à 9, **caractérisé en ce qu'**au moins deux des fonctions de l'appareil ou paramètres d'appareil suivants sont inclus dans le calcul de la valeur caractéristique :

- vitesse d'extraction d'air
- volume d'extraction d'air
- vitesse de circulation d'air
- volume de circulation d'air
- réserve de puissance de la soufflerie d'extraction d'air
- réserve de puissance de la soufflerie de circulation d'air
- KI-Discus (facteur de protection individuelle)
- durée de vie du filtre.

**11.** Établi de sécurité selon la revendication 10, **caractérisé en ce qu'**au moins une des valeurs de points déterminées pour les paramètres de l'appareil ou fonctions de l'appareil suivants est incluse comme multiplicateur dans le calcul de la valeur caractéristique :

- vitesse d'extraction d'air
- volume d'extraction d'air
- KI-Discus (facteur de protection individuelle)

**12.** Établi de sécurité selon la revendication 11, **caractérisé en ce que** la valeur caractéristique est calculée selon la formule suivante:

$$(A+B+C+D) \times E \times F$$

où les lettres correspondent aux valeurs de points des fonctions de l'appareil ou paramètres de l'appareil suivants :

A - vitesse ou volume circulation d'air
B - réserve de puissance de la soufflerie d'extraction d'air
C - réserve de puissance de la soufflerie de circulation d'air
D - durée de vie du filtre
E - vitesse ou volume d'extraction d'air
F - KI-Discus (facteur de protection individuelle)

FIG. 1

# Fig. 2

| Umluftgeschwin-digkeit Gemessener Wert | ⇨ | Punkteskala Umluftge-schwindigkeit | ⇨ | A | Zahlenwert für Umluftge-schwindigkeit |
| Leistungsreserve Abluftgebläse Abgespeicherter Geräteparameter | ⇨ | Punkteskala Abluftgebläse | ⇨ | B | Zahlenwert für Abluftgebläse |
| Leistungsreserve Umluftgebläse Abgespeicherter Geräteparameter | ⇨ | Punkteskala Umluftgeblä-se | ⇨ | C | Zahlenwert für Umluftgebläse |
| Filterstandzeit Gemessener Wert | ⇨ | Punkteskala Filterstand-zeit | ⇨ | D | Zahlenwert für Filterstandzeit |
| Abluftgeschwin-digkeit Gemessener Wert | ⇨ | Punkteskala Abluftge-schwindigkeit | ⇨ | E | Zahlenwert für Abluftge-schwindigkeit |
| KI-Discus-Perso-nenschutzfaktor Abgespeicherter Geräteparameter | ⇨ | Punkteskala Personen-schutzfaktor | ⇨ | F | Zahlenwert für Personen-schutzfaktor |

7

8

$(A + B + C + D) \cdot E \cdot F$ ⇩

KENNZAHL

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4441784 C2
- EP 0844030 A